# EUROPEAN PATENT SPECIFICATION

(11) **EP 3 226 623 B1**
(45) Date of publication and mention of the grant of the patent: **15.07.2020**
(21) Application number: 14908140.8
(22) Date of filing: 16.12.2014
(51) Int. Cl.: H04W 52/02

(54) **METHOD FOR AWAKENING WIRELESS-FIDELITY NETWORK AND TERMINAL**
VERFAHREN ZUM AUFWECKEN EINES WIFI-NETZWERKS UND ENDGERÄT
PROCÉDÉ DE RÉACTIVATION DE RÉSEAU WI-FI ET TERMINAL

(43) Date of publication of application: 04.10.2017
(73) Proprietor: Huawei Technologies Co., Ltd., Longgang District Shenzhen, Guangdong 518129 (CN)
(72) Inventor: XIANG, Chao, Shenzhen Guangdong 518129 (CN); ZHU, Guangze, Shenzhen Guangdong 518129 (CN); XUE, Guiying, Shenzhen Guangdong 518129 (CN); YAO, Xinzheng, Shenzhen Guangdong 518129 (CN); ZHAO, Peng, Shenzhen Guangdong 518129 (CN)
(74) Representative: Thun, Clemens
(86) International application number: PCT/CN2014/093953
(87) International publication number: WO 2016/095105

(56) References cited:
- WO-A1-2014/194579
- CN-A- 102 833 831
- CN-A- 103 024 928
- US-A1- 2012 052 793
- US-A1- 2013 182 693
- US-A1- 2014 337 923

## Description

### TECHNICAL FIELD

The present invention relates to the communications field, and in particular, to a method for waking up a Wireless Fidelity network and a terminal.

### BACKGROUND

For a wireless router with a battery device, a key index is working duration, and the working duration mainly depends on power consumption. To obtain a longer working time, when no Wireless Fidelity (Wireless-Fidelity, WiFi) user is connected, this type of router may automatically disable a WiFi network, so as to reduce overall power consumption. In this case, a Bluetooth (Bluetooth, BT) function may be enabled, and the router is in a discoverable mode.

Currently, after this type of router disables the WiFi network, when a user needs to connect to the WiFi network, the user enables a BT function on a terminal, discovers the router by means of BT scanning, and attempts to establish a BT paring with the router, so as to wake up the router to enable the WiFi network.

For example, WO 2014/194579A1 refers to a device for starting a mobile hotspot, including: a password sending module, configured to send a Bluetooth pairing password and a preset start password to a mobile terminal that previously accessed a mobile hotspot via WIFI; a working state detecting module, configured to: detect the working state of mobile hotspot; a sleep triggering module, configured to trigger the mobile hotspot to enter into a sleeping state when detecting that the mobile hotspot has no user access and/or no data service; a Bluetooth module, configured to establish a Bluetooth connection with the mobile terminal and receive a password sent by the mobile terminal when the mobile hotspot is in the sleeping state; a start controlling module, configured to compare the password with a locally stored start password and control the mobile hotspot to enter into the working state when the comparison result is that they are consistent.

Further, US 2012/0052793A1 refers to a low-cost and power-saving system and methodology that reduces interference, unnecessary signaling and allows for more pertinent network listen measurements, by employing Bluetooth® technology in a femto access point (FAP) is provided. Moreover, a cellular transmitter in the FAP remains deactivated and is activated only if a UE, authorized for femtocell access, is within the femtocell coverage area. Bluetooth pairing is employed to identify authorized UEs within the femtocell coverage area. In an aspect, the FAP includes a Bluetooth modem that broadcasts a unique Bluetooth identity (ID) and facilitates Bluetooth pairing with nearby UEs. During the interval when the cellular transmitter is deactivated, the FAP performs background activities (e.g., network listen scanning and/or femto jamming of macro pilot). Additionally, a Bluetooth repeater is embedded within the FAP that extends the range of a Bluetooth-enabled device to the femtocell coverage area.

Further, US 2013/0182693A1 refers to a method of enabling a mobile broadband hotspot by an auxiliary radio. By utilizing a commonly available auxiliary radio, such as a Bluetooth radio, hotspot connectivity using a primary radio, such as Wi-Fi, can be readily enabled. Accordingly, device connections, guest access, and device disconnections can be easily requested on demand from a mobile broadband hotspot. Additionally, the mobile broadband hotspot may be configured to enable or disable connections using a predetermined schedule. The pre-determined schedule may provide Internet access only when necessary, such as during scheduled device updates.

However, in an actual application, when a user needs to use a WiFi network in a case in which the WiFi network on a router side is disabled, the user needs to manually enable a BT function of a terminal to perform BT scanning and attempt to choose to connect to a device found by means of scanning. The user can use the WiFi network of the router only after paring succeeds and the WiFi network of the router is woken up. Although the power consumption of the router is reduced, an operation that needs to be performed by the user is added compared with a case in which the router does not disable the WiFi network, and consequently interaction experience between the user and the terminal is degraded.

### SUMMARY

Embodiments of the present invention provide a method for waking up a Wireless Fidelity network, and a terminal, so as to automatically wake up a WiFi network on a router side when a user needs to use the WiFi network in a case in which the WiFi network is disabled, thereby reducing user operations and improving user experience.

In a first aspect a method for waking up a Wireless Fidelity, WiFi, network performed by a terminal is provided, the method comprising:
**a.)** determining that the terminal needs to connect to a particular WiFi network;
**b.)** detecting whether a particular router has enabled the particular WiFi network, wherein the particular WiFi network is created by the particular router, the particular WiFi network is a WiFi network whose Media Access Control, MAC, address is recorded in historical connection information and to which the terminal has connected to, and the particular router has a function of creating the WiFi network and a function of wirelessly waking up Bluetooth, BT;
**c.)** when it is determined that the particular WiFi network is not enabled, enabling a BT function and performing a scanning by using the enabled BT function, thereby determining at least one BT network as a scanning result;
**d.)** obtaining from each of the determined BT networks of the at least one BT network a MAC address;
**e.)** in a first alternative, comparing a unique identifier, OUI, of each MAC address obtained in step d.) with a unique identifier, OUI, of the MAC address of the particular WiFi network and determining that one OUI of a MAC address obtained in step d.) matches the OUI of the MAC address of the particular WiFi network and determining a BT network with the one OUI matching the OUI of the particular WiFi network as a particular BT network created by the particular router;
   in a second alternative instead of the first alternative, comparing each MAC address obtained in step d.) with the MAC address of the particular WIFI network and determining that one MAC address obtained in step d.) matches the MAC address of the particular WiFi network and determining the BT network with the one MAC address matching the MAC of the particular WiFi network as the particular BT network created by the particular router;
**f.)** obtaining a BT identifier of the particular BT network and establishing a BT connection to the particular router according to the obtained BT identifier, and waking up the particular router by means of the BT connection, so that the particular router enables the particular WiFi network.

In a first implementation form of the first aspect the detecting whether the particular router has enabled the particular WiFi network specifically comprises:
attempting to connect to the particular WiFi network;
when the terminal successfully connects to the particular WiFi network, determining that the particular router has enabled the particular WiFi network; and
when a quantity of times of failing in attempting to connect to the particular WiFi network reaches a preset threshold, determining that the particular router has not enabled the particular WiFi network.

In a second implementation form of the first aspect the detecting whether the particular router has enabled the particular WiFi network specifically comprises:
scanning a network identifier of the particular WiFi network within a preset time, or scanning a network identifier of the particular WiFi network until a quantity of times of failing is greater than a predetermined quantity of times, wherein the network identifier of the particular WiFi network is recorded in the historical connection information; and
when the network identifier of the particular WiFi network cannot be found by means of scanning, determining that the particular router has not enabled the particular WiFi network.

In a third aspect a terminal is provided configured and intended to perform any of the above methods.

In a second aspect a terminal configured and intended to perform any of the above methods is provided.

As can be seen from the foregoing technical solutions, the embodiments of the present invention have the following advantages: In the embodiments of the present invention, when it is determined that a terminal needs to connect to a particular WiFi network, whether a particular router has enabled the particular WiFi network is detected. When it is determined that the particular WiFi network is not enabled, the terminal enables a BT function; scans and obtains, according to information about the particular WiFi network recorded in historical connection information, a BT identifier corresponding to the particular router; and establishes a BT connection to the particular router according to the BT identifier corresponding to the particular router, and wakes up the particular router by means of the BT connection, so that the particular router enables the particular WiFi network. In this way, automatic wake-up of a WiFi network on a router side is implemented when a user needs to use the WiFi network in a case in which the WiFi network is disabled. Moreover, the entire process is automatically completed by the terminal, and the user does not need to manually perform any operation, so that steps of consideration, selection, and operation of the user are omitted, and user experience is improved.

### BRIEF DESCRIPTION OF DRAWINGS

FIG. 1 is a schematic flowchart of a method for waking up a Wireless Fidelity network according to an embodiment of the present invention;
FIG. 2 is another schematic flowchart of a method for waking up a Wireless Fidelity network according to an embodiment of the present invention;
FIG. 3 is a schematic structural diagram of a terminal according to an embodiment of the present invention;
FIG. 4 is another schematic structural diagram of a terminal according to an embodiment of the present invention;
FIG. 5 is another schematic structural diagram of a terminal according to an embodiment of the present invention;
FIG. 6 is another schematic structural diagram of a terminal according to an embodiment of the present invention;
FIG. 7 is another schematic structural diagram of a terminal according to an embodiment of the present invention;
FIG. 8 is another schematic structural diagram of a terminal according to an embodiment of the present invention; and
FIG. 9 is another schematic structural diagram of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

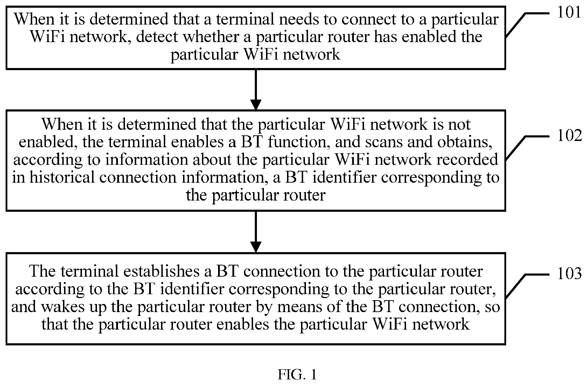

Referring to FIG. 1, an embodiment of a method for waking up a Wireless Fidelity network according to an embodiment of the present invention includes:

101: When it is determined that a terminal needs to connect to a particular WiFi network, detect whether a particular router has enabled the particular WiFi network.

When it is determined that the terminal needs to connect to the particular WiFi network, the terminal may detect whether the particular router has enabled the particular WiFi network. The particular WiFi network is created by the particular router. The particular WiFi network is a WiFi network that is recorded in historical connection information and that the terminal has connected to. The particular router has a function of creating a WiFi network and a function of wirelessly waking up BT.

It should be noted that in a case in which the particular WiFi network of the particular router has not been connected to for a long time, the particular router may disable the particular WiFi network, enter a sleep mode, and enable a BT network. The function of wirelessly waking up BT refers to that the particular router can be woken up by connecting to the BT network created by the particular router, so that the particular router enables the particular WiFi network again.

102: When it is determined that the particular WiFi network is not enabled, the terminal enables a BT function, and scans and obtains, according to information about the particular WiFi network recorded in historical connection information, a BT identifier corresponding to the particular router.

When the terminal determines that the particular WiFi network created by the particular router is not enabled, the terminal enables the BT function, and scans and obtains, according to the information about the particular WiFi network recorded in the historical connection information, the BT identifier corresponding to the particular router. It may be understood that the corresponding BT identifier is a network identifier of the BT network created by the particular router.

Information about a WiFi network that the terminal has connected to is recorded in the historical connection information.

103: The terminal establishes a BT connection to the particular router according to the BT identifier corresponding to the particular router, and wakes up the particular router by means of the BT connection, so that the particular router enables the particular WiFi network.

After obtaining the BT identifier corresponding to the particular router, the terminal establishes a BT connection to the particular router according to the BT identifier, and wakes up the particular router by means of the BT connection, so that the particular router enables the particular WiFi network.

In this embodiment of the present invention, when it is determined that a terminal needs to connect to a particular WiFi network, whether a particular router has enabled the particular WiFi network is detected. When it is determined that the particular WiFi network is not enabled, the terminal enables a BT function; scans and obtains, according to information about the particular WiFi network recorded in historical connection information, a BT identifier corresponding to the particular router; and establishes a BT connection to the particular router according to the BT identifier corresponding to the particular router, and wakes up the particular router by means of the BT connection, so that the particular router enables the particular WiFi network. In this way, automatic wake-up of a WiFi network on a router side is implemented when a user needs to use the WiFi network in a case in which the WiFi network is disabled. Moreover, the entire process is automatically completed by the terminal, and the user does not need to manually perform any operation, so that steps of consideration, selection, and operation of the user are omitted, and user experience is improved.

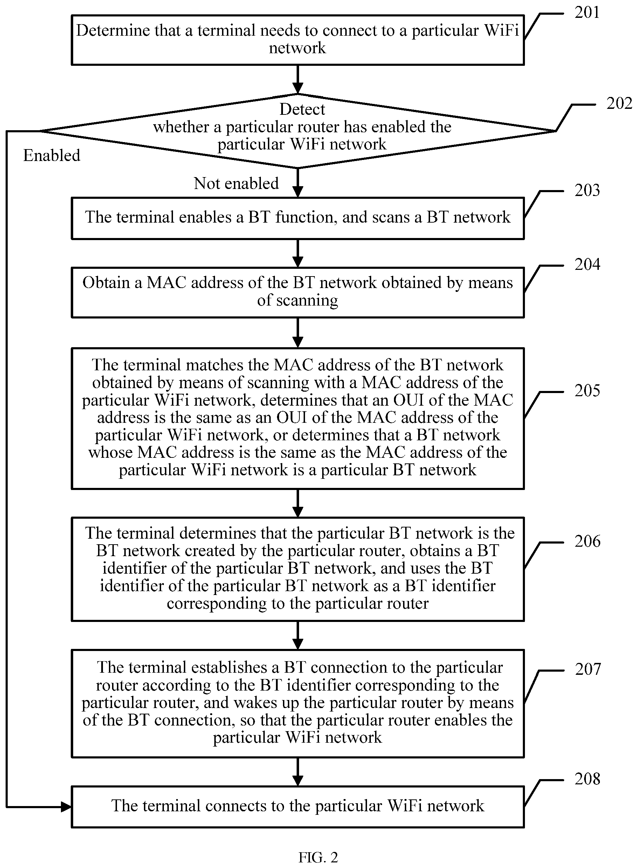

The method for waking up a Wireless Fidelity network in the embodiments of the present invention is described in detail below. Referring to FIG. 2, another embodiment of the method for waking up a Wireless Fidelity network according to an embodiment of the present invention includes:

201: Determine that a terminal needs to connect to a particular WiFi network.

The particular WiFi network is a WiFi network that is recorded in historical connection information of the terminal and that the terminal has connected to. The particular WiFi network is created by the particular router. The particular router has a function of creating a WiFi network and a function of wirelessly waking up BT.

In an actual application, there may be multiple cases or manners of determining that the terminal needs to connect to the particular WiFi network:

Optionally, when it is detected that an uplink data network of the terminal is unavailable and a quantity of network data request packets in the terminal is greater than a first preset threshold, it may be determined that the terminal needs to connect to the particular WiFi network. The uplink data network may be various data networks except a WiFi network, and is, for example, a 2G network, a 3G network, and a 4G network.

Optionally, when it is detected that the uplink data network of the terminal is unavailable and an operation of executing a network application program in the terminal is received, it may be determined that the terminal needs to connect to the particular WiFi network. The network application program refers to an application program that needs a connection to a network, for example, a browser or a network player.

Optionally, if it is detected, by means of human face recognition, that a user is in front of the terminal, it may also be determined that the terminal needs to connect to the particular WiFi network.

Optionally, if it is detected, by means of fingerprint recognition, that a user is using the terminal, it may also be determined that the terminal needs to connect to the particular WiFi network.

In addition, there may further be many other manners of determining that the terminal needs to connect to the particular WiFi network. The manner may be set according to an actual condition, and is not limited herein.

202: Detect whether a particular router has enabled the particular WiFi network.

After it is determined that the terminal needs to connect to the particular WiFi network, the terminal detects whether the particular router has enabled the particular WiFi network.

If it is determined that the particular router has enabled the particular WiFi network, the terminal may directly trigger step 208, and connect to the particular WiFi network.

If it is determined that the particular router has not enabled the particular WiFi network, step 203 is triggered.

It may be understood that the terminal may detect, in multiple manners, whether the particular router has enabled the particular WiFi network:

Optionally, the terminal may detect, in the following manners, whether the particular router has enabled the particular WiFi network:

The terminal may attempt to connect to the particular WiFi network.

If the terminal successfully connects to the particular WiFi network, it may be determined that the particular router has enabled the particular WiFi network.

If a quantity of times of failing in attempting, by the terminal, to connect to the particular WiFi network reaches a second preset threshold (for example, the second preset threshold is set to five times), it may be determined that the particular router has not enabled the particular WiFi network.

Optionally, the terminal may detect, in the following manners, whether the particular router has enabled the particular WiFi network:

The terminal may scan a network identifier of the particular WiFi network within a predetermined time, or the terminal may scan a network identifier of the particular WiFi network until a quantity of times of failing is greater than a predetermined quantity of times, where the network identifier of the particular WiFi network is recorded in the historical connection information.

If the terminal finds the network identifier of the particular WiFi network by means of scanning within the predetermined time or the predetermined quantity of times, it may be determined that the particular router has enabled the particular WiFi network.

If the terminal fails to obtain the network identifier of the particular WiFi network by means of scanning within the predetermined time or the predetermined quantity of times, it may be determined that the particular router has not enabled the particular WiFi network.

It may be understood that in addition, there may be many other manners of detecting whether the particular router has enabled the particular WiFi network, and the manners are not limited herein.

203: The terminal enables a BT function, and scans a BT network.

When it is determined that the terminal needs to connect to the particular WiFi network and it is detected that the particular router has not enabled the particular WiFi network, the terminal enables the BT function, and scans the BT network.

It may be understood that after enabling the BT function, the terminal may obtain many BT networks by means of scanning, but only one of the BT networks is the BT network created by the particular router.

204: Obtain a MAC address of the BT network obtained by means of scanning.

After the BT network is obtained by means of scanning, the terminal obtains the MAC address of the BT network obtained by means of scanning.

It may be understood that the MAC address of the BT network may be used to uniquely identify the

BT network. A MAC address of a WiFi network created by a router that has both a function of creating a WiFi network and a function of wirelessly waking up BT may be completely the same as or different from the MAC address of the BT network.

However, even if the MAC address of the WiFi network is different from the MAC address of the BT network, because the WiFi network and the BT network are created by a same router, a difference between numbers of the two MAC addresses is also within a preset value, and unique identifiers OUIs in compilations of the MAC addresses of the WiFi network and the BT network are definitely the same.

205: The terminal matches the MAC address of the BT network obtained by means of scanning with a MAC address of the particular WiFi network, determines that the OUI of the MAC address is the same as an OUI of the MAC address of the particular WiFi network, or determines that a BT network whose MAC address is the same as the MAC address of the particular WiFi network is a particular BT network.

After obtaining the MAC address of the BT network obtained by means of scanning, the terminal matches the MAC address of the BT network obtained by means of scanning with the MAC address of the particular WiFi network, and determines that the BT network whose OUI of the MAC address is the same as the OUI of the MAC address of the particular WiFi network is the particular BT network, or determines that the BT network whose MAC address is the same as the MAC address of the particular WiFi network is the particular BT network.

Specifically, whether to select same OUIs or same MAC addresses may be determined according to an actual application case, and is not limited herein.

206: The terminal determines that the particular BT network is the BT network created by the particular router, obtains a BT identifier of the particular BT network, and uses the BT identifier of the particular BT network as a BT identifier corresponding to the particular router.

After obtaining the particular BT network, the terminal determines that the particular BT network is the BT network created by the particular router, obtains the BT identifier of the particular BT network, and uses the BT identifier of the particular BT network as the BT identifier corresponding to the particular router.

207: The terminal establishes a BT connection to the particular router according to the BT identifier corresponding to the particular router, and wakes up the particular router by means of the BT connection, so that the particular router enables the particular WiFi network.

It may be understood that after obtaining the BT identifier corresponding to the particular router, the terminal may connect to the particular BT network, establish a BT connection to the particular router, and wake up the particular router by means of the BT connection, so that the particular router enables the particular WiFi network.

In an actual application, when a terminal connects to a BT network created by a router having a function of wirelessly waking up BT, the router may be automatically enabled to create a WiFi network, and the created BT network is disabled.

208: The terminal connects to the particular WiFi network.

The historical connection information may further store information such as an authentication manner and a login password of the particular WiFi network. After waking up the particular WiFi network by using BT, the terminal may connect to the particular WiFi network.

In this embodiment of the present invention, a terminal scans a MAC address of a BT network, matches the MAC address with a MAC address of a WiFi network, and obtains a BT identifier corresponding to a particular router, so as to automatically identify, from multiple BT networks that are obtained by means of scanning, a BT network created by the particular router, and wake up the WiFi network by connecting to the BT network, thereby implementing automatic wake-up of the WiFi network.

For ease of understanding, the method for waking up a Wireless Fidelity network in this embodiment of the present invention is specifically described below by using a specific application scenario.

A router is normally enabled, a WiFi hotspot is enabled, and information about a WiFi network is broadcast. After obtaining the router by means of scanning, a terminal connects to the router and normally uses the WiFi network.

The terminal automatically records configuration information of the WiFi network in historical connection information.

When a user has not operated the terminal for a period of time, the terminal enters a sleep screensaver mode.

The router periodically checks whether the terminal stays connected or whether there is a service procedure. If it is detected that no terminal is connected or there is no service traffic within a particular time, the router disables the WiFi network and enables a BT function. The router enters a sleep mode to reduce power consumption.

When the user needs to use a service on the terminal after a period of time and operates the terminal again, for example, when the user unlocks the terminal to stop a screensaver and starts to browse a web page or the terminal plays an online video, in this case, the terminal detects that a quantity of network data request packets exceeds a preset threshold and determines that there is a service need. However, at this time, an uplink data network (for example, a 3G network or a 4G network) is unavailable. It is determined that the terminal needs to connect to the WiFi network.

The terminal attempts to connect to a WiFi network recorded in the historical connection information.

After a quantity of times of failing in attempting, by the terminal, to connect to the WiFi network reaches five, the terminal determines that the router has not enabled the WiFi network and the router is in a sleep mode and needs to be woken up by using BT.

The terminal enables the BT function, scans a BT network, and obtains MAC addresses of BT networks obtained by means of scanning.

The terminal matches a MAC address of the WiFi network recorded in the historical connection information with the MAC addresses of the BT networks obtained by means of scanning, and obtains a BT identifier of a BT network that is of the BT networks obtained by means of scanning and whose MAC address is the same as the MAC address of the WiFi network.

The terminal attempts to perform BT handshake with the BT network corresponding to the BT identifier.

After receiving a handshake connection request, the router interrupts a waking up system, enables the WiFi network, and disables the BT function, so as to enter a normal working state.

The terminal connects to the WiFi network.

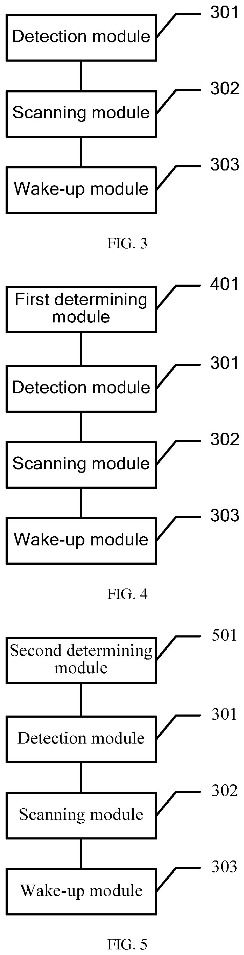

The terminal in this embodiment of the present invention is described below. Referring to FIG. 3, an embodiment of the terminal according to an embodiment of the present invention includes:
a detection module 301, configured to: when it is determined that the terminal needs to connect to a particular WiFi network, detect whether a particular router has enabled the particular WiFi network, where the particular WiFi network is created by the particular router, the particular WiFi network is a WiFi network that is recorded in historical connection information and that the terminal has connected to, and the particular router has a function of creating a WiFi network and a function of wirelessly waking up Bluetooth BT;
a scanning module 302, configured to: when the detection module 301 determines that the particular WiFi network is not enabled, enable a BT function, and scan and obtain, according to information about the particular WiFi network recorded in the historical connection information, a BT identifier corresponding to the particular router; and
a wake-up module 303, configured to: establish a BT connection to the particular router according to the BT identifier that is obtained by means of scanning by the scanning module 302 and that corresponds to the particular router, and wake up the particular router by means of the BT connection, so that the particular router enables the particular WiFi network.

In this embodiment of the present invention, when it is determined that a terminal needs to connect to a particular WiFi network, the detection module 301 detects whether a particular router has enabled the particular WiFi network. When it is determined that the particular WiFi network is not enabled, the scanning module 302 enables a BT function; scans and obtains, according to information about the particular WiFi network recorded in historical connection information, a BT identifier corresponding to the particular router. The wake-up module 303 establishes a BT connection to the particular router according to the BT identifier corresponding to the particular router, and wakes up the particular router by means of the BT connection, so that the particular router enables the particular WiFi network. In this way, automatic wake-up of a WiFi network on a router side is implemented when a user needs to use the WiFi network in a case in which the WiFi network is disabled. Moreover, the entire process is automatically completed by the terminal, and the user does not need to manually perform any operation, so that steps of consideration, selection, and operation of the user are omitted, and user experience is improved.

In the foregoing embodiment, when it is determined that the terminal needs to connect to the particular WiFi network, the detection module 301 detects whether the particular router has enabled the particular WiFi network. In an actual application, there are multiple manners in which the terminal determines that the terminal needs to connect to the particular WiFi network:

Optionally, referring to FIG. 4, in another embodiment of the terminal in this embodiment of the present invention, the terminal shown in FIG. 3 further includes:
a first determining module 401, configured to: when it is detected that an uplink data network of the terminal is unavailable and a quantity of network data request packets in the terminal is greater than a first preset threshold, determine that the terminal needs to connect to the particular WiFi network.

In this embodiment, when it is detected that the uplink data network of the terminal is unavailable, if the quantity of network data request packets in the terminal is greater than the first preset threshold, it is determined the terminal needs to connect to the WiFi network. In this way, the first determining module may determine that the terminal needs to connect to the particular WiFi network.

Optionally, referring to FIG. 5, in another embodiment of the terminal in this embodiment of the present invention, the terminal shown in FIG. 3 further includes:
a second determining module 501, configured to: when it is detected that an uplink data network of the terminal is unavailable and an operation of executing a network application program in the terminal is received, determine that the terminal needs to connect to the particular WiFi network.

In this embodiment, when it is detected that the uplink data network of the terminal is unavailable, if it is detected that the terminal receives the operation of executing the network application program in the terminal, it is determined that the terminal needs to connect to the WiFi network. The second determining module 501 may determine that the terminal needs to connect to the particular WiFi network.

There may be other manners of determining that the terminal needs to connect to the particular WiFi network. The manner is not limited herein.

In the foregoing embodiment, the detection module 301 detects whether the particular router has enabled the particular WiFi network. In an actual application, there are multiple manners of detecting whether the particular router has enabled the particular WiFi network:

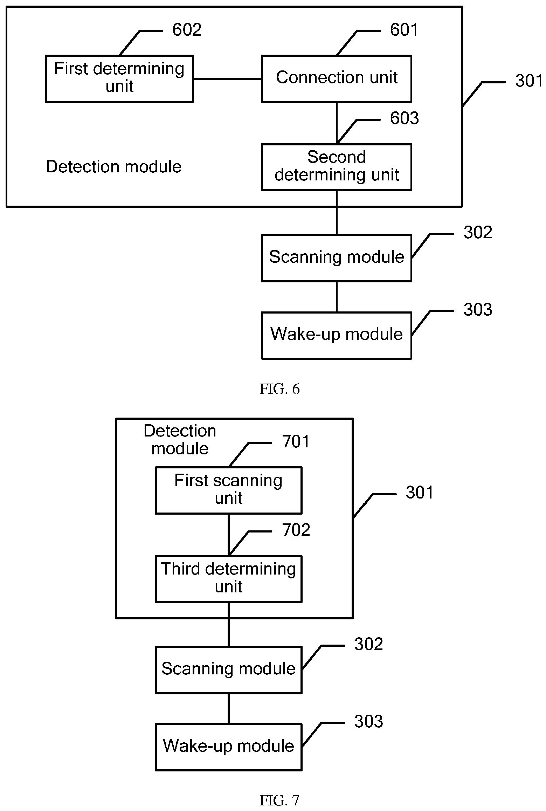

Optionally, referring to FIG. 6, in another embodiment of the terminal in this embodiment of the present invention, the detection module 301 specifically includes:
a connection unit 601, configured to attempt to connect to the particular WiFi network;
a first determining unit 602, configured to: when the connection unit 601 successfully connects to the particular WiFi network, determine that the particular router has enabled the particular WiFi network; and
a second determining unit 603, configured to: when a quantity of times of failing in attempting, by the connection unit 601, to connect to the particular WiFi network reaches a second preset threshold, determine that the particular router has not enabled the particular WiFi network.

In this embodiment of the present invention, the detection module 301 determines, by determining whether the terminal successfully connects to the particular WiFi network, whether the particular router has enabled the particular WiFi network.

Optionally, referring to FIG. 7, in another embodiment of the terminal in this embodiment of the present invention, the detection module 301 specifically includes:
a first scanning unit 701, configured to: scan a network identifier of the particular WiFi network within a predetermined time, or scan a network identifier of the particular WiFi network until a quantity of times of failing is greater than a predetermined quantity of times, where the network identifier of the particular WiFi network is recorded in the historical connection information; and
a third determining unit 702, configured to: when the first scanning unit 701 fails to obtain the network identifier of the particular WiFi network by means of scanning, determine that the particular router has not enabled the particular WiFi network.

In this embodiment of the present invention, the detection module 301 determines, by determining whether the network identifier of the particular WiFi network is successfully obtained by means of scanning, whether the particular router has enabled the particular WiFi network.

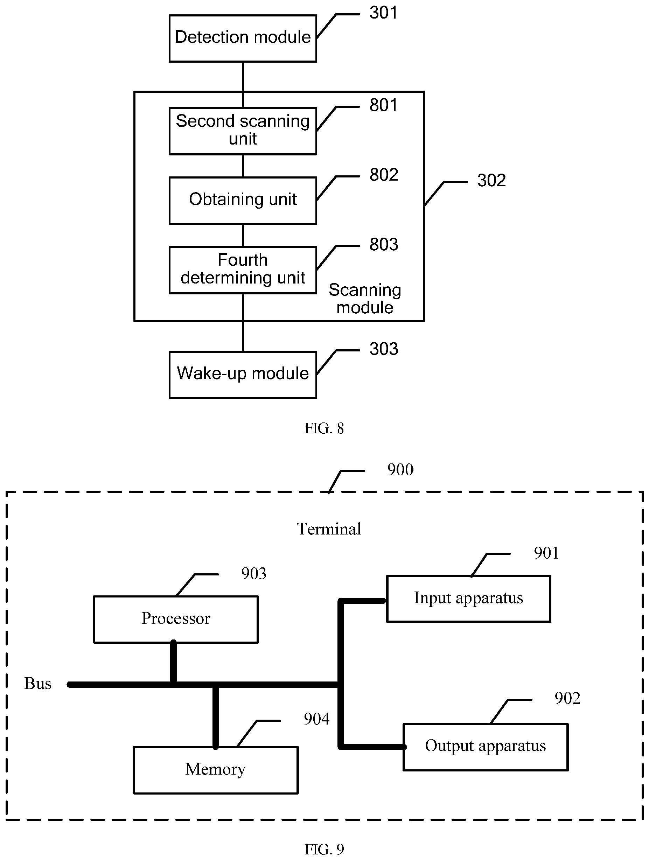

In the foregoing embodiment, the scanning module 302 scans and obtains, according to the information about the particular WiFi network recorded in the historical connection information, the BT identifier corresponding to the particular router. In an actual application, the scanning module 302 may obtain, by matching MAC, the BT identifier corresponding to the particular router. Referring to FIG. 8, in another embodiment of the terminal according to an embodiment of the present invention, the scanning module 302 may specifically include:
a second scanning unit 801, configured to enable the BT function, and scan a BT network;
an obtaining unit 802, configured to obtain a MAC address of the BT network obtained by means of scanning by the second scanning unit 801; and
a fourth determining unit 803, configured to: determine that a particular BT network is a BT network created by the particular router, obtain a BT identifier of the particular BT network, and use the BT identifier of the particular BT network as the BT identifier corresponding to the particular router, where a unique identifier OUI in a compilation of a MAC address of the particular BT network is the same as an OUI of the MAC address of the particular WiFi network, or a MAC address of the particular BT network is the same as the MAC address of the particular WiFi network.

It may be understood that the historical connection information in the terminal includes the MAC address of the particular WiFi network.

In this embodiment of the present invention, the fourth determining unit 803 determines, by matching the MAC address of the BT network obtained by means of scanning with a MAC address of a WiFi network, the BT identifier corresponding to the particular router, so as to connect more accurately to the BT network created by the particular router, thereby waking up the particular WiFi network.

For ease of understanding of the foregoing embodiment, a process of interaction between modules of the foregoing terminal in a specific application scenario is described below:

A router is normally enabled, a WiFi hotspot is enabled, and information about a WiFi network is broadcast. After obtaining the router by means of scanning, a terminal connects to the router and normally uses the WiFi network.

The terminal automatically records configuration information of the WiFi network in historical connection information.

When a user has not operated the terminal for a period of time, the terminal enters a sleep screensaver mode.

The router periodically checks whether the terminal stays connected or whether there is a service procedure. If it is detected that no terminal is connected or there is no service traffic within a particular time, the router disables the WiFi network and enables a BT function. The router enters a sleep mode to reduce power consumption.

When the user needs to use a service on the terminal after a period of time and operates the terminal again, for example, when the user unlocks the terminal to stop a screensaver and starts to browse a web page or the terminal plays an online video, in this case, the first determining module 401 detects that a quantity of network data request packets exceeds a preset threshold and determines that there is a service need. However, at this time, an uplink data network (for example, a 3G network or a 4G network) is unavailable. The first determining module 401 determines that the terminal needs to connect to the WiFi network.

The connection unit 601 attempts to connect to a WiFi network recorded in the historical connection information.

After a quantity of times of failing in attempting, by the terminal, to connect to the WiFi network reaches five, the second determining unit 603 determines that the router has not enabled the WiFi network and the router is in a sleep mode and needs to be woken up by using BT.

The second scanning unit 801 enables the BT function and scans a BT network. The obtaining unit 802 obtains MAC addresses of BT networks obtained by means of scanning.

The fourth determining unit 803 matches a MAC address of the WiFi network recorded in the historical connection information with the MAC addresses of the BT networks obtained by means of scanning, and obtains a BT identifier of a BT network that is of the BT networks obtained by means of scanning and whose MAC address is the same as the MAC address of the WiFi network.

The wake-up module 303 attempts to perform BT handshake with the BT network corresponding to the BT identifier.

After receiving a handshake connection request, the router interrupts a waking up system, enables the WiFi network, and disables the BT function, so as to enter a normal working state.

The terminal connects to the WiFi network.

Referring to FIG. 9, another embodiment of a terminal 900 according to an embodiment of the present invention includes:
an input apparatus 901, an output apparatus 902, a processor 903, and a memory 904 (there may be one or more processors 903 in the terminal 900, and one processor 903 is used as an example in FIG. 9). In some embodiments of the present invention, the input apparatus 901, the output apparatus 902, the processor 903, and the memory 904 may be connected to each other by using a bus or in another manner. Connection by using the bus is used as an example in FIG. 9.

By invoking an operation instruction stored in the memory 904, the processor 903 is configured to perform the following steps:
when it is determined that the terminal needs to connect to a particular WiFi network, detecting whether a particular router has enabled the particular WiFi network, where the particular WiFi network is created by the particular router, the particular WiFi network is a WiFi network that is recorded in historical connection information and that the terminal has connected to, and the particular router has a function of creating a WiFi network and a function of wirelessly waking up Bluetooth BT;
when it is determined that the particular WiFi network is not enabled, enabling a BT function, and scanning and obtaining, according to information about the particular WiFi network recorded in the historical connection information, a BT identifier corresponding to the particular router; and
establishing a BT connection to the particular router according to the BT identifier corresponding to the particular router, and waking up the particular router by means of the BT connection, so that the particular router enables the particular WiFi network.

In some embodiments of the present invention, the processor 903 is further configured to perform the following step:
when it is detected that an uplink data network of the terminal is unavailable and a quantity of network data request packets in the terminal is greater than a first preset threshold, determining that the terminal needs to connect to the particular WiFi network.

In some embodiments of the present invention, the processor 903 is further configured to perform the following step:
when it is detected that an uplink data network of the terminal is unavailable and an operation of executing a network application program in the terminal is received, determining that the terminal needs to connect to the particular WiFi network.

In some embodiments of the present invention, the processor 903 specifically performs the following steps:
attempting to connect to the particular WiFi network;
upon successful connection to the particular WiFi network, determining that the particular router has enabled the particular WiFi network; and
when a quantity of times of failing in attempting to connect to the particular WiFi network reaches a second preset threshold, determining that the particular router has not enabled the particular WiFi network.

In some embodiments of the present invention, the processor 903 specifically performs the following steps:
scanning a network identifier of the particular WiFi network within a predetermined time, or scanning a network identifier of the particular WiFi network until a quantity of times of failing is greater than a predetermined quantity of times, where the network identifier of the particular WiFi network is recorded in the historical connection information; and
when the network identifier of the particular WiFi network cannot be found by means of scanning, determining that the particular router has not enabled the particular WiFi network.

In some embodiments of the present invention, the historical connection information includes the MAC address of the particular WiFi network, and the processor 903 specifically performs the following steps:
enabling the BT function, and scanning a BT network;
obtaining a MAC address of the BT network obtained by means of scanning; and
determining that a particular BT network is a BT network created by the particular router, obtaining a BT identifier of the particular BT network, and using the BT identifier of the particular BT network as the BT identifier corresponding to the particular router, where a unique identifier OUI in a compilation of a MAC address of the particular BT network is the same as an OUI of the MAC address of the particular WiFi network, or a MAC address of the particular BT network is the same as the MAC address of the particular WiFi network.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A method for waking up a Wireless Fidelity, WiFi, network performed by a terminal, the method comprising:
**a.)** determining that the terminal needs to connect to a particular WiFi network (step 201);
**b.)** detecting whether a particular router has enabled the particular WiFi network, wherein the particular WiFi network is created by the particular router, the particular WiFi network is a WiFi network whose Media Access Control, MAC, address is recorded in historical connection information and to which the terminal has connected to, and the particular router has a function of creating the WiFi network and a function of wirelessly waking up Bluetooth, BT (step 202);
**c.)** when it is determined that the particular WiFi network is not enabled, enabling a BT function and performing a scanning by using the enabled BT function, thereby determining at least one BT network as a scanning result (step 203);
**d.)** obtaining from each of the determined BT networks of the at least one BT network a MAC address (step 204);
**e.)** in a first alternative, comparing a unique identifier, OUI, of each MAC address obtained in step d.) with a unique identifier, OUI, of the MAC address of the particular WiFi network and determining that one OUI of a MAC address obtained in step d.) matches the OUI of the MAC address of the particular WiFi network and determining a BT network with the one OUI matching the OUI of the particular WiFi network as a particular BT network created by the particular router;
in a second alternative instead of the first alternative, comparing each MAC address obtained in step d.) with the MAC address of the particular WIFI network and determining that one MAC address obtained in step d.) matches the MAC address of the particular WiFi network and determining the BT network with the one MAC address matching the MAC of the particular WiFi network as the particular BT network created by the particular router (step 205, 206);
**f.)** obtaining a BT identifier of the particular BT network (step 206) and establishing a BT connection to the particular router according to the obtained BT identifier, and waking up the particular router by means of the BT connection, so that the particular router enables the particular WiFi network (step 207).

2. The method according to claim 1, wherein the detecting whether the particular router has enabled the particular WiFi network specifically comprises:
attempting to connect to the particular WiFi network;
when the terminal successfully connects to the particular WiFi network, determining that the particular router has enabled the particular WiFi network; and
when a quantity of times of failing in attempting to connect to the particular WiFi network reaches a preset threshold, determining that the particular router has not enabled the particular WiFi network.

3. The method according to claim 1 or 2, wherein the detecting whether the particular router has enabled the particular WiFi network specifically comprises:
scanning a network identifier of the particular WiFi network within a preset time, or scanning a network identifier of the particular WiFi network until a quantity of times of failing is greater than a predetermined quantity of times, wherein the network identifier of the particular WiFi network is recorded in the historical connection information; and
when the network identifier of the particular WiFi network cannot be found by means of scanning, determining that the particular router has not enabled the particular WiFi network.

4. A terminal configured and intended to perform any of the methods according to claims 1 - 3.

## Patentansprüche

1. Verfahren zum Aufwecken eines Wireless-Fidelity- bzw. WiFi-Netzwerks, das durch ein Endgerät durchgeführt wird, wobei das Verfahren Folgendes umfasst:
**a.)** Bestimmen, dass sich das Endgerät mit einem speziellen WiFi-Netzwerk verbinden muss (Schritt 201);
**b.)** Detektieren, ob ein spezieller Router das spezielle WiFi-Netzwerk aktiviert hat, wobei das spezielle WiFi-Netzwerk durch den speziellen Router erzeugt wird, das spezielle WiFi-Netzwerk ein WiFi-Netzwerk ist, dessen Medienzugangssteuerung- bzw. MAC-Adresse in historischen Verbindungsinformationen aufgezeichnet ist und mit dem sich das Endgerät verbunden hat, und der spezielle Router eine Funktion zum Erzeugen des WiFi-Netzwerks und eine Funktion zum drahtlosen Aufwecken von Bluetooth bzw. BT aufweist (Schritt 202);
**c.)** wenn bestimmt wird, dass das spezielle WiFi-Netzwerk nicht aktiviert ist, Aktivieren einer BT-Funktion und Durchführen eines Scannens unter Verwendung der aktivierten BT-Funktion, wodurch als ein Scanergebnis mindestens ein BT-Netzwerk bestimmt wird (Schritt 203);
**d.)** Erhalten einer MAC-Adresse von jedem der bestimmten BT-Netzwerke des mindestens einen BT-Netzwerks (Schritt 204);
**e.)** in einer ersten Alternative, Vergleichen einer eindeutigen Kennung bzw. OUI jeder in Schritt d.) erhaltenen MAC-Adresse mit einer eindeutigen Kennung bzw. OUI der MAC-Adresse des speziellen WiFi-Netzwerks und Bestimmen, dass eine OUI einer in Schritt d.) erhaltenen MAC-Adresse mit der OUI der MAC-Adresse des speziellen WiFi-Netzwerks übereinstimmt, und Bestimmen eines BT-Netzwerks mit der einen OUI, die mit der OUI des speziellen WiFi-Netzwerks übereinstimmt, als ein spezielles BT-Netzwerk, das durch den speziellen Router erzeugt wird;
in einer zweiten Alternative anstelle der ersten Alternative, Vergleichen jeder in Schritt d.) erhaltenen MAC-Adresse mit der MAC-Adresse des speziellen WiFi-Netzwerks und Bestimmen, dass eine in Schritt d.) erhaltene MAC-Adresse mit der MAC-Adresse des speziellen WiFi-Netzwerks übereinstimmt, und Bestimmen des BT-Netzwerks mit der einen MAC-Adresse, die mit der MAC des speziellen WiFi-Netzwerks übereinstimmt, als das spezielle BT-Netzwerk, das durch den speziellen Router erzeugt wird (Schritt 205, 206);
**f.)** Erhalten einer BT-Kennung des speziellen BT-Netzwerks (Schritt 206) und Aufbauen einer BT-Verbindung mit dem speziellen Router gemäß der erhaltenen BT-Kennung, und Aufwecken des speziellen Routers mittels der BT-Verbindung, sodass der spezielle Router das spezielle WiFi-Netzwerk aktiviert (Schritt 207).

2. Verfahren nach Anspruch 1, wobei das Detektieren, ob der spezielle Router das spezielle WiFi-Netzwerk aktiviert hat, spezifisch Folgendes umfasst:
Versuchen, sich mit dem speziellen WiFi-Netzwerk zu verbinden;
wenn sich das Endgerät erfolgreich mit dem speziellen WiFi-Netzwerk verbindet, Bestimmen, dass der spezielle Router das spezielle WiFi-Netzwerk aktiviert hat; und
wenn eine Anzahl von Malen des Scheiterns am Versuchen, sich mit dem speziellen WiFi-Netzwerk zu verbinden, eine voreingestellte Schwelle erreicht, Bestimmen, dass der spezielle Router das spezielle WiFi-Netzwerk nicht aktiviert hat.

3. Verfahren nach Anspruch 1 oder 2, wobei das Detektieren, ob der spezielle Router das spezielle WiFi-Netzwerk aktiviert hat, spezifisch Folgendes umfasst:
Scannen einer Netzwerkkennung des speziellen WiFi-Netzwerks innerhalb einer voreingestellten Zeit, oder
Scannen einer Netzwerkkennung des speziellen WiFi-Netzwerks, bis eine Anzahl von Malen des Scheiterns größer ist als eine vorbestimmte Anzahl von Malen, wobei die Netzwerkkennung des speziellen WiFi-Netzwerks in den historischen Verbindungsinformationen aufgezeichnet ist; und
wenn die Netzwerkkennung des speziellen WiFi-Netzwerks nicht mittels des Scannens gefunden werden kann, Bestimmen, dass der spezielle Router nicht das spezielle WiFi-Netzwerk aktiviert hat.

4. Endgerät, das dafür ausgelegt und beabsichtigt ist, ein beliebiges der Verfahren nach den Ansprüchen 1 - 3 durchzuführen.

## Revendications

1. Procédé de réveil d'un réseau de fidélité sans fil (Wi-Fi), réalisé par un terminal, le procédé consistant à :
a) déterminer que le terminal doit se connecter à un réseau Wi-Fi particulier (étape 201) ;
b) détecter si un routeur particulier a activé le réseau Wi-Fi particulier, le réseau Wi-Fi particulier étant créé par le routeur particulier, le réseau Wi-Fi particulier étant un réseau Wi-Fi dont l'adresse de contrôle d'accès au support (MAC) est enregistrée dans une information d'historique de connexion et auquel le terminal s'est connecté, et le routeur particulier ayant une fonction de création du réseau Wi-Fi et une fonction Bluetooth (BT) de réveil sans fil (étape 202) ;
c) quand il est déterminé que le réseau Wi-Fi particulier n'est pas activé, activer une fonction BT et réaliser une analyse au moyen de la fonction BT activée, de manière à déterminer au moins un réseau BT en guise de résultat d'analyse (étape 203) ;
d) obtenir, à partir de chacun des réseaux BT déterminés de l'au moins un réseau BT, une adresse MAC (étape 204) ;
e) selon une première variante, comparer un identifiant unique (OUI) de chaque adresse MAC obtenue à l'étape d) à un identifiant unique (OUI) de l'adresse MAC du réseau Wi-Fi particulier et déterminer qu'un OUI d'une adresse MAC obtenue à l'étape d) concorde avec l'OUI de l'adresse MAC du réseau Wi-Fi particulier, et déterminer un réseau BT avec l'OUI concordant avec l'OUI du réseau Wi-Fi particulier en guise de réseau BT particulier créé par le routeur particulier ;
selon une seconde variante à la place de première variante, comparer chaque adresse MAC obtenue à l'étape d) à l'adresse MAC du réseau Wi-Fi particulier et déterminer qu'une adresse MAC obtenue à l'étape d) concorde avec l'adresse MAC du réseau Wi-Fi particulier, et déterminer le réseau BT avec l'adresse MAC concordant avec la MAC du réseau Wi-Fi particulier en guise de réseau BT particulier créé par le routeur particulier (étapes 205, 206) ;
f) obtenir un identifiant BT du réseau BT particulier (étape 206) et établir une connexion BT avec le routeur particulier selon l'identifiant BT obtenu, et réveiller le routeur particulier au moyen de la connexion BT, de sorte que le routeur particulier active le réseau Wi-Fi particulier (étape 207).

2. Procédé selon la revendication 1, dans lequel la détection de savoir si le routeur particulier a activé le réseau Wi-Fi particulier consiste spécifiquement à :
essayer de se connecter au réseau Wi-Fi particulier ;
quand le terminal se connecte de manière satisfaisante au réseau Wi-Fi particulier, déterminer que le routeur particulier a activé le réseau Wi-Fi particulier ; et
quand le nombre de tentatives non satisfaisantes de connexion au réseau Wi-Fi particulier atteint un seuil prédéfini, déterminer que le routeur particulier n'a pas activé le réseau Wi-Fi particulier.

3. Procédé selon la revendication 1 ou 2, dans lequel la détection de savoir si le routeur particulier a activé le réseau Wi-Fi particulier consiste spécifiquement à :
analyser un identifiant de réseau du réseau Wi-Fi particulier dans un délai prédéfini ou analyser un identifiant de réseau du réseau Wi-Fi particulier jusqu'à ce que le nombre de tentatives non satisfaisantes soit supérieur à un nombre prédéterminé, l'identifiant de réseau du réseau Wi-Fi particulier étant enregistré dans l'information d'historique de connexion ; et
quand l'identifiant de réseau du réseau Wi-Fi particulier ne peut pas être trouvé au moyen d'une analyse, déterminer que le routeur particulier n'a pas activé le réseau Wi-Fi particulier.

4. Terminal configuré et prévu pour réaliser l'un quelconque des procédés selon les revendications 1 à 3.
